# EUROPEAN PATENT APPLICATION

(11) **EP 3 766 557 A1**
(43) Date of publication of application: **20.01.2021**
(21) Application number: 19187457.7
(22) Date of filing: 19.07.2019
(51) Int. Cl.: B01D 11/02, G06Q 30/00

(54) **METHOD FOR EXTRACTION**

(71) Applicant: Folium Biosciences Europe B.V., 1382 GS Weesp (NL)
(72) Inventor: Woerlee, Geert Feye, 1382 GS WEESP (NL)
(74) Representative: van Essen, Peter Augustinus

(57) **Abstract**

The invention provides a method for producing a composition of lipophilic compounds using extraction using liquid or supercritical carbon dioxide as an extractant, said method comprising providing at least one first matrix, selecting at least one second matrix comprising at least one terpene or at least one flavonoid compound that is detectable in said composition of lipophilic compounds, for providing a fingerprint in said composition of lipophilic compounds, said fingerprint at least defined by said at least one terpene or at least one flavonoid compound.

## Description

### Field of the invention

The invention relates to a method for producing a composition of lipophilic compounds by extraction using liquid or supercritical carbon dioxide as an extractant.

### Background of the invention

Extraction using for instance carbon dioxide in supercritical of fluid form is known, for instance from WO9413377 and WO02102947 of the current inventor. WO9413377 according to its abstract describes "The invention relates to a device and process, such as supercritical extraction, for separating a mixture or extracting a material, in which at least the following steps are carried out: a) treatment of the mixture or material with an extraction fluid in a treatment vessel, said extraction fluid entraining product from the mixture of material, which results in a laden extraction fluid which is discharged from the treatment vessel, b) separating product from the laden extraction fluid, which results in an extraction fluid depleted of product, c) increasing the density of the depleted extraction fluid of step b), and return thereof to the treatment vessel. This is achieved by increasing, in step c), the density of the depleted extraction fluid by cooling this fluid, and by heating this extraction fluid at a point in space, which is preferably situated lower down than the point at which the cooling of step c) is performed. The heating and cooling are preferably effected by means of heat exchangers which, on the one hand, have the extraction fluid flowing through them and, on the other hand, are incorporated in an auxiliary-fluid circuit. Via the auxiliary fluid, the process can be controlled and the transport of the extraction fluid can be provided for."

WO02102947 according to its abstract describes "The present invention is concerned with a new method of processing lipid materials, such as triglycerides and waxes, which process involves contacting such lipid materials with a reactive granulate in the presence of a gas in near supercritical state. More particularly the present invention relates to a method of processing lipid material comprising the steps of a) dissolving into the lipid material from 5-95 wt.% of a gas selected from the group consisting of carbon dioxide, ethane, propane, or nitrous oxide and mixtures thereof, at a temperature and a pressure at which the gas per se would be near its supercritical state, b) contacting the lipid material containing the dissolved gas with a reactive granulate, c) separating the granulate from the lipid material and d) allowing the gas to evaporate from the lipid material by reducing the pressure. The reactive granulate employed in the present process may suitably be a catalyst, such as bleaching earth or hydrogenation catalyst, or an adsorbent, such as active carbon."

More recent WO2019032609 according to its abstract describes "Chromatography systems and methods for using carbon dioxide to separate one or more cannabis-derived compounds from other components of a mixture are generally described. Some of the methods described herein comprise transporting a mixture comprising a first cannabis-derived compound and one or more other components through a chromatography column containing a stationary phase comprising a packing material. In some embodiments, the mixture is transported through the column within a mobile phase that comprises carbon dioxide (e.g., supercritical CO2, liquid CO2). The mobile phase may be substantially free of a co-solvent that is in liquid phase at standard room temperature and pressure. In some embodiments, the mobile phase is free of any co-solvent and comprises 100 vol% carbon dioxide. The first cannabis-derived compound may interact with the stationary phase and/or the mobile phase to a different degree than the one or more other components of the mixture, causing at least partial separation of the first cannabis-derived compound from the one or more other components within the column. Due to this separation, at least one fraction of the mobile phase that comprises the first cannabis-derived compound and is substantially free of the one or more other components of the mixture may be collected."

### Summary of the invention

A disadvantage of prior art is that origin and authenticity and production quality are difficult to manage and to control.

Hence, it is an aspect of the invention to provide an alternative production method, which preferably further at least partly obviates one or more of above-described drawbacks.

There is provided a method for producing a composition of lipophilic compounds by extraction using liquid or supercritical carbon dioxide as an extractant, said method comprising:
- providing an amount of at least one first matrix holding a mixture of lipophilic compounds of said composition of lipophilic compounds;
- selecting an extraction temperature and an extraction pressure;
- defining a separation pressure and a separation temperature which, when applied, result in said composition of lipophilic compounds;
- selecting an amount at least one second matrix comprising at least one terpene and/or at least one flavonoid compound that is detectable in said composition of lipophilic compounds, said amount of at least one second matrix providing a weight percentage of said at least one second matrix to an extraction mixture of said at least one first matrix and said at least one second matrix of less than 10 % by weight, in particular less than 5% by weight, and such that the resulting amount of the at least one terpene and/or at least one flavonoid compound from said at least one second matrix at said extraction temperature and said extraction pressure and said separation pressure range and said separation temperature range is detectable in said composition of lipophilic compounds;
- mixing said amount of at least one first matrix and said amount of at least one second matrix for providing said extraction mixture;
- extracting said extraction mixture using said extractant, at said selected extraction pressure and said extraction temperature, providing an extract in said extractant;
- separating said extract from said extractant at said defined separation pressure and said defined separation temperature for providing a fingerprint in said composition of lipophilic compounds, said fingerprint at least defined by said at least one terpene and/or at least one flavonoid compound in said composition of lipophilic compounds.

The method provides a unique mark on the composition. Furthermore, the nature of the fingerprint can be selected in such a way that it complies with a further natural nature of the composition.

The fingerprint can thus be based upon at least one terpene. Alternatively, the fingerprint can be based upon at least one flavonoid. In an embodiment, the fingerprint is based upon a combination of at least one terpene and at least one flavonoid.

In an embodiment, the lipophilic compounds are derived, for instance extracted from, plant material. The natural ingredient can be said to be plant-based. Thus, the at least one first matrix in an embodiment is plant material.

Wikipedia defines "plants" in the following way:
"Plants are mainly multicellular, predominantly photosynthetic eukaryotes of the kingdom Plantae. Historically, plants were treated as one of two kingdoms including all living things that were not animals, and all algae and fungi were treated as plants. However, all current definitions of Plantae exclude the fungi and some algae, as well as the prokaryotes (the archaea and bacteria). By one definition, plants form the clade Viridiplantae (Latin name for "green plants"), a group that includes the flowering plants, conifers and other gymnosperms, ferns and their allies, hornworts, liverworts, mosses and the green algae, but excludes the red and brown algae." In the current application, we include red and brown algae into the definition of "plants".

In an embodiment, "natural ingredient" refers to compounds and compositions that are extracted from plant-based material. The natural ingredient may comprise a mixture of natural ingredients. Currently, a lipophilic compound or lipophilic compounds are of particular interest.

In particular, the at least one first matrix is selected from hemp, cannabis, plant material from which natural oils are extracted, like olives and nuts, hop and tobacco.

Applicant developed a process based on CO2 techniques which can recover the valuable natural ingredients from plants and plant material. Other inert fluids like nitrogen may be used, but have been found to result in a more complex method. In particular when using these in a superfluid condition.

In general, natural ingredients are selected from colorant, pigment, antioxidant, essential oil, wax, and combinations thereof. These natural ingredients can meet the constantly rising market demand of circular economy as well as the growing demand for natural ingredients from a natural source in contrast to synthetically obtained products. This is the result of constant consumer's demand, for instance with respect to health and wellbeing, as well as the legislation in force towards plastic and chemicals of oilfield petroleum origin in corroboration with circular recycling concept. Collecting and valorising valuable plant material can be done from different sources, for instance greenhouses, open fields, various markets, auctions, and combinations thereof. Sources of the natural ingredients are often plant-based. These plant-based sources can in particular be selected from flowers, fruits and vegetables. The plant-based sources can be sorted based on natural ingredients and/or source (open field or green houses) and can be further treated to recover valuable natural ingredients. The natural ingredients are in the current context in particular selected from lipophilic components, for instance oils like essential oil. These natural ingredients can be very sensitive towards air, oxygen, heat, moisture and light which prevents them of being used in a lot of products. Their stability issues can be corrected by protecting them against environmental degradation. The natural ingredient can be incorporated into the encapsulation material. In that sense, some natural ingredient may remain at the outer surface of agglomerates of encapsulation material. A protecting coating can enable a required products shelf life. Such a protecting coating using an encapsulation material can be as well selected from natural source, biodegradable source, or combinations thereof. It can be designed or selected to confer the natural ingredient a required stability and may ensure a long lasting preservation.

The method for producing a composition of lipophilic compounds using a supercritical fluid usually comprises two stages. In a first stage, material is brought into contact with the fluid. This is referred to as extraction. In next stage, the extracted mixture is separated from the fluid. This is referred to as separation.

In general, lipophilic compounds are compounds having an affinity for lipids. In many of the current embodiments, the lipophilic compound will comprise a mixture of compounds. In the current context, in particular, the lipophilic compounds are from a plant-based first matrix. In particular, in an embodiment this relates to organic extracts.

In a particular embodiment, the lipophilic compound comprise cannabidiol, cannabigerol (CBG) type compounds (including cannabigerol propyl analogue (CBGV)), plant cannabinoids or phyto-cannabinoids, tetrahydrocannabinol, and a combination thereof.

To the lipophilic compound that is extracted from the at least one first matrix, additional terpene compound or compounds can added. This can be done for functional reasons, like improving taste, smell, addition functional effect, therapeutic effects, or effect increase of the lipophilic compound or compounds. In these embodiments, often at least 10 % by weight of at least one second matrix is added to the at least one first matrix.

The addition of at least one second matrix can also be done for providing a tamper evidence of other protection. In these cases, in fact a fingerprint is added. This fingerprint in an embodiment cannot be detected by average human senses. In fact, in an embodiment the fingerprint is only detected by chemical analysis like gas chromatography (GC). In such an embodiment, less than 10 % by weight of second matrix is added. More in particular, less than 5 % by weight is added. More in particular, less than 2 % by weight is added. For the effect of fingerprinting, it was even possible to add less than 1 % by weight. In fact, a lower percentage is desired to prevent detection by human senses like smell or taste. In order to make the effect even better, a combination of different second matrix is added, in a total as described above. Usual, the added amount of second matrix is more than 0.05 % by weight (on the total first and second matrix).

Providing a protection may also be done by carefully selecting a separation setting, like temperature and pressure, and knowledge of the resulting composition and ratio of different terpenes.

The amount of second matrix is selected in such a way that it is measurable or detectable after extraction and separation.

Examples of suitable second matrix is pepper, basil, juniper, eucalyptus, clove, tea leaves.

Usually, the settings (pressure, temperature) of the extraction process and of the separation process are selected for optimizing the recovery of lipophilic compound or compounds from the at least one first matrix. Next, a range of these settings is determined that would result in similar results.

Next, the nature and amount of second matrix is selected for providing a detectable or measurable fingerprint. The first and second matrices are then mixed, and the mixed matrix material is subjected to extraction and separation.

For retrieving the material, applicant developed a process which involves pressurized inert fluids, in particular fluids that are under atmospheric conditions gasses. More in particular, these fluids are used in superfluid state. In an embodiment, these inert fluids are selected from CO2, N2 and a mixture thereof. This can be combined with solvent mixture to facilitate a better extraction of the natural ingredient from the plant cell. By utilizing pressurized inert fluid, for instance CO2, the plant cell turgor is equilibrated, thus the plant membrane becomes permeable, facilitating the dissolved natural ingredient or natural ingredients, to diffuse out of the cell and into the solvent. The extract is then rich in natural ingredient.

In an embodiment, the fingerprint is defined by said at least one terpene and/or flavonoid compound in said composition of lipophilic compounds. In an embodiment, the fingerprint is further defined by a quantity of said at least one terpene and/or at least one flavonoid compound in said composition of lipophilic compounds. In an embodiment, the fingerprint is further defined by a ratio of said at least one terpene and/or at least one flavonoid compound in said composition of lipophilic compounds.

In an embodiment, the at least one second matrix comprises a mixture of second matrices. In the description above, possible material are indicated that can provide first matrix material.

In an embodiment, the at least one second matrix comprises a mixture of first matrices. In the description above, various material are indicated that can provide second matrix material. When mixing predefined second matrix material at known amounts, a complex fingerprint can be created. Often, one must try some materials at small amounts, and based upon known ratios of terpenes and/or flavonoids, complex fingerprints can easily be created.

In an embodiment, the fingerprint is measurable, in particular instrument measurable, more in particular measurable using gas chromatography. In fact, in an embodiment the amount of second matrix is such that it cannot or almost not be detected by human senses. Usually, thus requires amounts less than 1 % by weight.

In an embodiment, the composition of lipophilic compounds comprise a mixture of THC and CBD. In an embodiment, the at least one first matrix comprising hemp or cannabis.

In an embodiment, the at least one terpene compound is selected from Limonene, Linalool, α-pinene, Myrcene, p-cymene, Geraniol, β-caryophyllen, β-Eudesmol, Phytol, and a combination thereof.

In an embodiment, the at least one first matrix comprises hop, sunflower seeds, olives, tobacco, hemp, and a combination thereof.

In an embodiment, the extraction pressure is between 10 and 1000 bar, and said extraction temperature is between 0°C and 100°C. In an embodiment the extraction pressure is between 15 bar and 300 bar, and said extraction temperature is between 10°Cand 60°C. In an embodiment, the extraction pressure and said extraction temperature have a positive dependency.

In an embodiment, the separation pressure is between 10 and 1000 bar, and said separation temperature is between 0°C and 100°C. In an embodiment, the separation pressure is between 15 bar and 300 bar, and said separation temperature is between 10°C and 60°C. In an embodiment, the separation pressure and said separation temperature have a positive dependency.

In an embodiment, the extraction fluid is at a liquid stage when contacting said extraction mixture. In an embodiment, the extraction fluid is carbon dioxide (CO2) at a liquid stage. In an embodiment, the CO2 is supercritical. In an embodiment, the fluid is at a temperature of below 100°C and at a pressure below 300 bar.

In an embodiment, the at least one first matrix substantially consists of plant material.

In an embodiment, the at least one second matrix substantially consists of plant material.

In an embodiment, the lipophilic compounds of said composition of lipophilic compounds comprise at least one terpene.

There is further provided a composition of lipophilic compounds, comprising a fingerprint of predefined parameters selected from amounts, ratios, and a combination thereof, of compounds selected from terpenes, flavonoids, and combinations thereof.

There is further provided a method for producing a composition of lipophilic compounds using extraction using liquid or supercritical carbon dioxide as an extractant, said method comprising:
- providing an amount of at least one first matrix;
- selecting an extraction temperature and an extraction pressure for extracting said at least one first matrix;
- selecting at least one second matrix comprising at least one compound selected from a terpene compound, a flavonoid compound, and a combination thereof that is detectable in said composition of lipophilic compounds;
- mixing said first matrix and said second matrix into an extraction mixture having less than 10 % by weight of said at least one second matrix;
- extracting said extraction mixture using said extractant for providing an extract in said extractant;
- separating said extract from said extractant for providing a fingerprint in said composition of lipophilic compounds, said fingerprint at least defined by said at least one terpene and/or at least one flavonoid compound in said composition of lipophilic compounds.

The term "substantially" herein, such as in "substantially all emission" or in "substantially consists", will be understood by the person skilled in the art. The term "substantially" may also include embodiments with "entirely", "completely", "all", etc. Hence, in embodiments the adjective substantially may also be removed. Where applicable, the term "substantially" may also relate to 90% or higher, such as 95% or higher, especially 99% or higher, even more especially 99.5% or higher, including 100%. The term "comprise" includes also embodiments wherein the term "comprises" means "consists of'.

The term "functionally" will be understood by, and be clear to, a person skilled in the art. The term "substantially" as well as "functionally" may also include embodiments with "entirely", "completely", "all", etc. Hence, in embodiments the adjective functionally may also be removed. When used, for instance in "functionally parallel", a skilled person will understand that the adjective "functionally" includes the term substantially as explained above. Functionally in particular is to be understood to include a configuration of features that allows these features to function as if the adjective "functionally" was not present. The term "functionally" is intended to cover variations in the feature to which it refers, and which variations are such that in the functional use of the feature, possibly in combination with other features it relates to in the invention, that combination of features is able to operate or function. For instance, if an antenna is functionally coupled or functionally connected to a communication device, received electromagnetic signals that are receives by the antenna can be used by the communication device. The word "functionally" as for instance used in "functionally parallel" is used to cover exactly parallel, but also the embodiments that are covered by the word "substantially" explained above. For instance, "functionally parallel" relates to embodiments that in operation function as if the parts are for instance parallel. This covers embodiments for which it is clear to a skilled person that it operates within its intended field of use as if it were parallel.

Furthermore, the terms first, second, third and the like in the description and in the claims, are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

Devices or apparatus when described are amongst others described during operation. As will be clear to the person skilled in the art, the invention is not limited to methods of operation or devices in operation.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. Use of the verb "to comprise" and its conjugations does not exclude the presence of elements or steps other than those stated in a claim. The article "a" or "an" preceding an element does not exclude the presence of a plurality of such elements. The invention may be implemented by means of hardware comprising several distinct elements, and by means of a suitably programmed computer. In the device or apparatus claims enumerating several means, several of these means may be embodied by one and the same item of hardware. The mere fact that certain measures are recited in mutually different dependent claims does not indicate that a combination of these measures cannot be used to advantage.

The invention further applies to an apparatus or device comprising one or more of the characterising features described in the description and/or shown in the attached drawings. The invention further pertains to a method or process comprising one or more of the characterising features described in the description and/or shown in the attached drawings.

The various aspects discussed in this patent can be combined in order to provide additional advantages. Furthermore, some of the features can form the basis for one or more divisional applications.

### Description of preferred embodiments

Various embodiments of production method an resulting composition of lipophilic compounds are described in the examples below. In particular, the example below show various embodiments of providing such a composition of lipophilic compounds with one or more fingerprints that provide traceability, for instance of the origin, of such a mixture. Furthermore, it can provide a tamper evidence marking to a such a mixture of compounds.

### Example 1

In this example an autoclave of 1 litre was filled with 100 grams of hemp. The temperature of the autoclave was set at 50°C and the pressure was set at 125 bar. The material in the autoclave was extracted with 10 kg of CO2 for one hour. The CO2 was collected at a separator which was set at 50 bar and 50°C. The amount of extracted material collected in the separator was 2.7 grams.

The experiment was repeated with new hemp material at 250 bar. In this case 4.0 grams was collected from the separator.

Afterwards the terpene profiles were compared, by analysing the composition with a Gas Chromatograph (GC).

The analyses show in table 1 below that the relative composition of the terpene profile remains similar at different extraction pressures. The absolute amount is decreased because at higher pressures more waxes and oils are extracted.

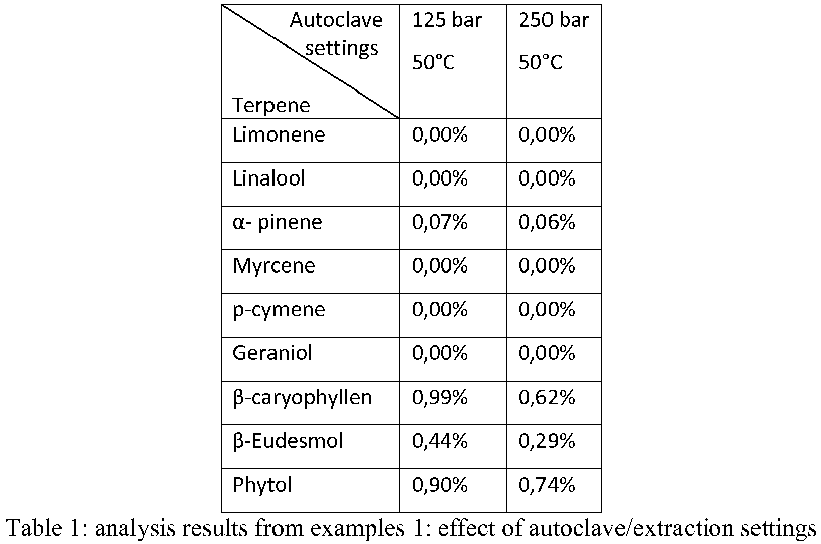

### Example 2

In this example, an autoclave of 1 litre was filled with 100 grams of hemp from the same batch as example 1. The temperature of the autoclave was set at 50°C and the pressure was set at 125 bar. The material in the autoclave was extracted with 10 kg of CO2 for one hour. The CO2 was collected at a separator which was set at 50 bar and 50°C. The amount of extracted material collected in the separator was 2.7 grams.

The experiment was repeated with new hemp material from the same batch as example 1, but the separator now was set at 50 bar and 30°C. Afterwards 2.8 grams of material was collected from the separator.

The experiment was repeated again with new hemp material from the same batch as example 1, but the separator was now set at 20 bar and 10°C. Afterwards 2.7 grams of material was collected.

We compared the terpene profiles afterwards, by analysing the composition with a GC.

The analyses show in table 2 below that the extracted profile can be changed by setting the separation conditions differently. By decreasing temperature and pressure we increase the amount of mono terpenoids, which are the more volatile terpene compounds.

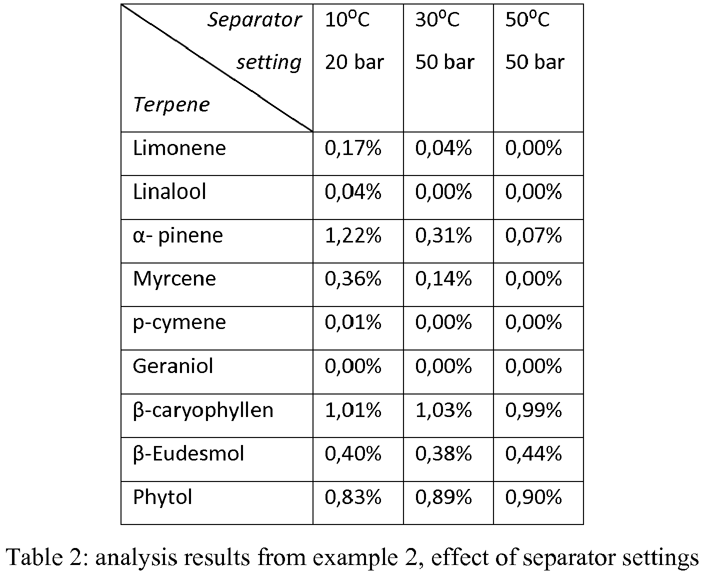

### Example 3

In this example an autoclave of 1 litre was filled with 100 grams of hemp from the same batch as example 1. The temperature of the autoclave was set at 50°C and the pressure was set at 125 bar. The material in the autoclave was extracted with 10 kg of CO2 for one hour. The CO2 was collected at a separator which was set at 50 bar and 30°C. The amount of extracted material collected in the separator was 2.7 grams.

The experiment was repeated with new hemp material from the same batch as example 1, but an additional amount of 2 grams of black pepper was added. Afterwards 2.6 grams of material was collected from the separator.

The experiment was repeated again with new hemp material from the same batch as example 1, but an additional amount of 10 grams of black pepper was added. Afterwards 2.8 grams of material was collected from the separator.

We compared the terpene profiles afterwards, by analysing the composition with a GC. The results are summarized in table 3 below.

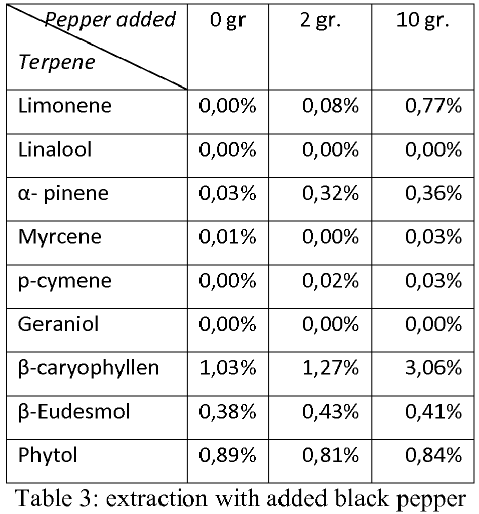

When adding certain natural compounds as second matrix to the material to be extracted (first and second matrices) we are able to enhance the flavour and the terpenoid and flavonoid profile to the requirements of the end product. Furthermore, we provided the mixture in a simple way with a fingerprint, using natural material as second matrix. In fact, the lower amount resulted in a detectable change in the profile, while the second amount in addition resulted in a change in flavour.

### Example 4

In this example an autoclave of 1 litre was filled with 100 grams of hemp from the same batch as example 1. The temperature of the autoclave was set at 50°C and the pressure was set at 125 bar. The material in the autoclave was extracted with 10 kg of CO2 for one hour. The CO2 was collected at a separator which was set at 50 bar and 30°C. The amount of extracted material collected in the separator was 2.7 grams.

The experiment was repeated with new hemp material from the same batch as example 1, but an additional amount of 4 grams of basil was added. Afterwards 2.6 grams of material was collected from the separator. Basil has high amounts of linalool.

The experiment was repeated again with new hemp material from the same batch as example 1, but an additional amount of 4 grams of juniper was added. Afterwards 2.8 grams of material was collected from the separator. Juniper is known to be used in Dutch "jenever" and has terpenoids as geraniol, ocymene and β-pinene.

The experiment was repeated with new hemp material from the same batch as example 1, but an additional amount of 4 grams of sweet oranges was added. Afterwards 2.7 grams of material was collected from the separator. Sweet orange as such is known for its high amounts of limonene.

The experiment was repeated again with new hemp material from the same batch as example 1, but an additional amount of 4 grams of eucalyptus was added. Afterwards 2.6 grams of material was collected from the separator. Eucalyptus as such is known for its high amount of Ocymene.

We compared the terpene profiles afterwards, by analysing the composition with a GC. The results are summarized in table 4 below.

Table 4 shows that the method enables us to change the composition of the terpenes. This makes it possible to increase clinical effects, shelve live, anti-oxidant levels, and create synergistic systems with cannabinoids or flavonoids. It can further provide a security marking or tamper evidence provision using natural material as second matrix, and that does not harm the product and is not directly clear. Furthermore, it is difficult, if not impossible, to duplicate if the ingredients are not known, in particular if the amount of at least one second matrix is below 10% by weight.

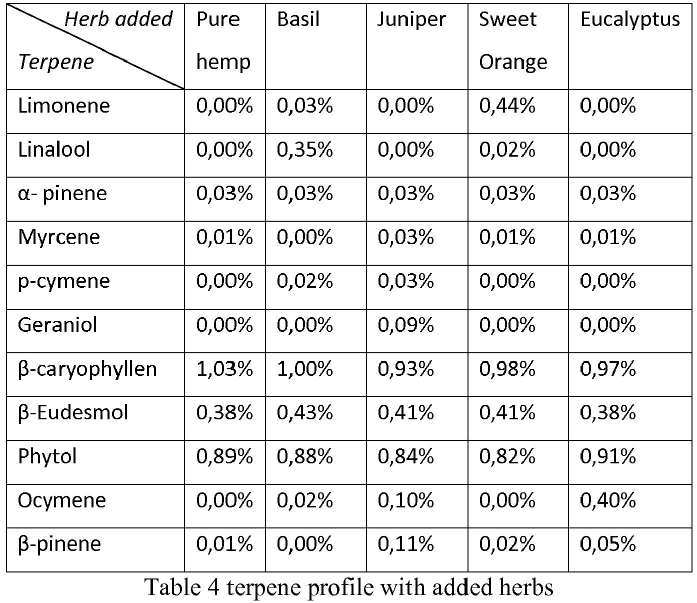

### Example 5

In this example an autoclave of 1 litre was filled with 100 grams of hemp from the same batch as example 1. The temperature of the autoclave was set at 50°C and the pressure was set at 250 bar. The material in the autoclave was extracted with 10 kg of CO2 for one hour. The CO2 was collected at a separator which was set at 50 bar and 30°C. The amount of extracted material collected in the separator was 4.0 grams.

The experiment was repeated with new hemp material from the same batch as example 1, but an additional amount of 1 gram of basil, 2 grams of juniper, 1 gram of eucalyptus and 1 gram of clove was added. Afterwards 4.1 grams of material was collected from the separator.

We compared the terpene profiles afterwards, by analysing the composition with a GC. The result is summarized in table 5 below.

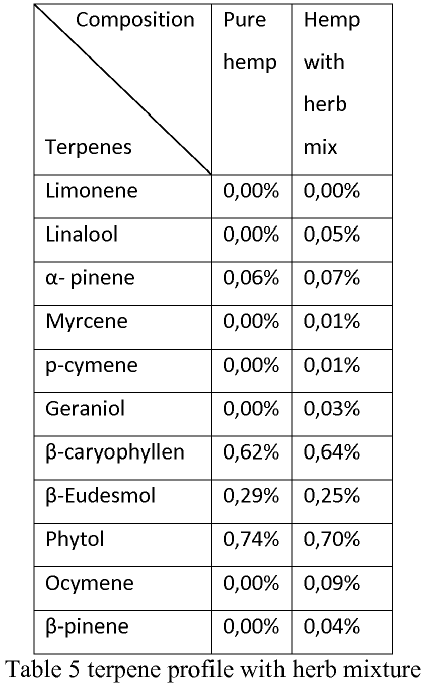

The example shows that we can apply the method also for mixtures of herbs as second matrix. This makes duplication even more complex. Using simple natural ingredients, the mixture can be provided with a unique fingerprint.

### Example 6

In this example an autoclave of 1 litre was filled with 100 grams of hemp from the same batch as example 1. The temperature of the autoclave was set at 50°C and the pressure was set at 125 bar. The material in the autoclave was extracted with 10 kg of CO2 for one hour. The CO2 was collected at a separator which was set at 50 bar and 20°C. The amount of extracted material collected in the separator was 2.7 grams.

The experiment was repeated with new hemp material from the same batch as example 1, but an additional amount of 100 mg tea tree leaves. Afterwards 2.8 grams of material was collected from the separator.

We compared the terpene profiles afterwards, by analysing the composition with a GC. The result is summarized in table 6, where concentrations are now given in ppm.

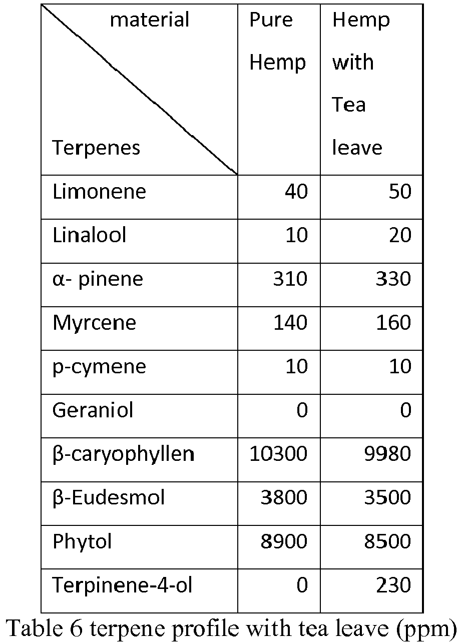

By adding a small amount of tea tree leaves as second matrix, we make it possible to fingerprint our material and trace it back all over the world.

In general, we give our extract a terpenoid trace that is unique, by changing amount, and mix. In this way we enable our products to be traced back even if it is used in end-product by other producers. We can change the composition of our trace mixture with other unique natural compounds and do this at different point in time during production or season. The unique chemical composition protects us against false claims and counterfeiting.

It will also be clear that the above description and drawings are included to illustrate some embodiments of the invention, and not to limit the scope of protection. Starting from this disclosure, many more embodiments will be evident to a skilled person. These embodiments are within the scope of protection and the essence of this invention and are obvious combinations of prior art techniques and the disclosure of this patent.

## Claims

1. A method for producing a composition of lipophilic compounds by extraction using liquid or supercritical carbon dioxide as an extractant, said method comprising:
- providing an amount of at least one first matrix holding a mixture of lipophilic compounds of said composition of lipophilic compounds;
- selecting an extraction temperature and an extraction pressure;
- defining a separation pressure and a separation temperature which, when applied, result in said composition of lipophilic compounds;
- selecting an amount at least one second matrix comprising at least one terpene or at least one flavonoid compound that is detectable in said composition of lipophilic compounds, said amount of at least one second matrix providing a weight percentage of said at least one second matrix to an extraction mixture of said at least one first matrix and said at least one second matrix of less than 10 % by weight, in particular less than 5% by weight, and such that the resulting amount of the at least one terpene and/or at least one flavonoid compound from said at least one second matrix at said extraction temperature and said extraction pressure and said separation pressure range and said separation temperature range is detectable in said composition of lipophilic compounds;
- mixing said amount of at least one first matrix and said amount of at least one second matrix for providing said extraction mixture;
- extracting said extraction mixture using said extractant, at said selected extraction pressure and said extraction temperature, providing an extract in said extractant;
- separating said extract from said extractant at said defined separation pressure and said defined separation temperature for providing a fingerprint in said composition of lipophilic compounds, said fingerprint at least defined by said at least one terpene and/or at least one flavonoid compound in said composition of lipophilic compounds.

2. The method of claim 1, wherein said fingerprint is defined by said at least one terpene and/or at least one flavonoid compound in said composition of lipophilic compounds, wherein in particular said fingerprint is further defined by a quantity of said at least one terpene and/or at least one flavonoid compound in said composition of lipophilic compounds, more in particular by a ratio of said at least one terpene and/or at least one flavonoid compound in said composition of lipophilic compounds.

3. The method of claim 1 of 2, wherein at least one second matrix comprises a mixture of second matrices.

4. The method of claim 1 or 2 or 3, wherein said at least one second matrix comprises a mixture of first matrices.

5. The method of any one of the preceding claims, wherein said fingerprint is measurable, in particular instrument measurable, more in particular measurable using gas chromatography.

6. The method of any one of the preceding claims, wherein said composition of lipophilic compounds comprise a mixture of THC and CBD, in particular said first matrix comprising hemp or cannabis.

7. The method of any one of the preceding claims, wherein said at least one terpene compound is selected from Limonene, Linalool, α-pinene, Myrcene, p-cymene, Geraniol, β-caryophyllen, β-Eudesmol, Phytol, and a combination thereof

8. The method of any one of the preceding claims, wherein said at least one first matrix comprises hop, sunflower seeds, olives, tobacco, hemp, and a combination thereof.

9. The method of any one of the preceding claims, wherein said extraction pressure is between 10 and 1000 bar, and said extraction temperature is between 0°C and 100°C, more in particular said extraction pressure is between 15 bar and 300 bar, and said extraction temperature is between 10°C and 60°C, more in particular said extraction pressure and said extraction temperature have a positive dependency.

10. The method of any one of the preceding claims, wherein said separation pressure is between 10 and 1000 bar, and said separation temperature is between 0°C and 100°C, more in particular said separation pressure is between 15 bar and 300 bar, and said separation temperature is between 10°C and 60°C, more in particular said separation pressure and said separation temperature have a positive dependency.

11. The method of any one of the preceding claims, wherein said extraction fluid is at a liquid stage when contacting said extraction mixture, in particular said extraction fluid is carbon dioxide (CO2) at a liquid stage, usually below 100°C and at a pressure below 300 bar.

12. The method of any one of the preceding claims, wherein said at least one first matrix substantially consists of plant material.

13. The method of any one of the preceding claims, wherein said at least one second matrix substantially consists of plant material.

14. The method of any one of the preceding claims, wherein said lipophilic compounds of said composition of lipophilic compounds comprise at least one terpene.

15. A composition of lipophilic compounds, comprising a fingerprint of predefined amounts and/or ratios of terpenes and/or flavonoids.
